# NEUE EUROPÄISCHE PATENTSCHRIFT

(11) **EP 0 818 382 B2**
(45) Veröffentlichungstag und Bekanntmachung des Hinweises auf die Entscheidung über den Einspruch: **29.09.2004**
(45) Hinweis auf die Patenterteilung: 10.10.2001
(21) Anmeldenummer: 97109357.0
(22) Anmeldetag: 10.06.1997
(51) Int. Cl.: B62D 5/12, B62D 5/30, F15B 11/036

(54) **Hydraulisch betätigte Lenkung für Kraftfahrzeuge**
Hydraulically actuated steering system for motor vehicles
Système de direction actionné hydrauliquement pour véhicules à moteur

(30) Priorität: 11.07.1996 DE 19627893
(43) Veröffentlichungstag der Anmeldung: 14.01.1998
(73) Patentinhaber: DaimlerChrysler AG, 70567 Stuttgart (DE)
(72) Erfinder: Bohner, Hubert, 71032 Böblingen (DE); Moser, Martin, 70736 Fellbach (DE)

(56) Entgegenhaltungen:
- EP-A- 0 266 658
- EP-A- 0 561 074
- EP-B- 0 307 612
- EP-B- 0 898 539
- DE-A- 3 508 500
- DE-A- 4 435 848
- DE-C- 819 339
- DE-C- 2 944 883
- DE-C- 3 506 347
- DE-C- 4 331 291
- DE-C- 19 546 733
- FR-A- 2 636 906
- JP-A- 57 198 168
- US-A- 3 485 141
- US-A- 4 372 413
- US-A- 5 522 302
- "Fahrwektechnik: Lenkanlagen und Hilfskraftlenkungen", Vogel Buchverlag, 1992, Seiten 136-149

## Beschreibung

Die Erfindung betrifft eine hydraulisch betätigte Lenkung für Kraftfahrzeuge, mit einer als Stellmotor angeordneten ersten doppeltwirkenden Kolben-Zylinder-Einheit sowie einer weiteren, mit der vorgenannten Kolben-Zylinder-Einheit mechanisch zwangsgekoppelten, doppeltwirkenden Kolben-Zylinder-Einheit, wobei beide Kolben-Zylinder-Einheiten gleichachsig zueinander angeordet sind und eine gemeinsame Kolbenstange aufweisen.

Kraftfahrzeuge werden üblicherweise serienmäßig mit hydraulischen Servolenkungen ausgerüstet, bei denen eine Lenkhandhabe bzw. ein Lenkhandrad und die Fahrzeuglenkräder miteinander mechanisch zwangsgekoppelt sind und eine als Servomotor dienende doppeltwirkende Kolben-Zylinder-Einheit in Abhängigkeit von den zwischen der Lenkhandhabe bzw. dem Lenkhandrad und den Fahrzeuglenkrädem wirksamen Kräften und Momenten derart gesteuert wird, daß am Lenkhandrad nur begrenzte Kräfte vom Fahrer aufgebracht werden müssen. Wenn also zwischen der Lenkhandhabe bzw. dem Lenkhandrad und den Fahrzeuglenkrädern große Kräfte bzw. Momente wirken, werden diese überwiegend von der Kolben-Zylinder-Einheit aufgenommen bzw. erzeugt.

Außerdem werden derzeit für normale Straßenfahrzeuge geeigente Lenkungen konzipiert, bei denen auf jegliche mechanische Zwangskopplung zwischen der Lenkhandhabe bzw. dem Lenkhandrad und den Fahrzeuglenkrädern verzichtet wird. Vielmehr sind hier die Lenkhandhabe bzw. das Lenkhandrad und die Fahrzeuglenkräder lediglich über eine Regelstrecke miteinander wirkungsmäßig gekoppelt, wobei die Lenkhandhabe bzw. Lenkhandrad einen Sollwertgeber für den jeweils gewünschten Lenkwinkel betätigen, welcher dann von der Regelstrecke an den Fahrzeuglenkrädern eingeregelt wird. Dabei kann die Regelstrecke weitere Parameter berücksichtigen und beispielsweise das Übersetzungsverhältnis zwischen dem Stell- bzw. Drehhub der Lenkhandhabe bzw. des Lenkhandrades und dem Lenkwinkel der Fahrzeuglenkräder in Abhängigkeit von der Fahrzeuggeschwindigkeit verändern. Außerdem kann gegebenenfalls Schleuderbewegungen des Fahrzeuges automatisch entgegengesteuert werden, bevor der Fahrer oder ohne daß der Fahrer eine geeignete Lenkkorrektur ausführt.

Aus der DE 29 44 883 C2 ist eine Lenkung gemäß dem Oberbegriff des Anspruchs 1 bekannt, die die eingangs angegebenen Merkmale aufweist und als hydrostatische Lenkeinrichtung mit zwei parallelen "hydraulischen Gestängen" ausgebildet ist. Damit kann die bei bisherigen Fahrzeugen notwendige Lenksäule wegfallen, welche vergleichsweise viel Platz benötigt und bei Unfällen die Verletzungsgefahr für den Fahrer erhöht.

Die DE 29 44 883 C2 zeigt insbesondere eine hydraulisch betätigte Lenkung für Kraftfahrzeuge ohne mechanische Zwangskopplung zwischen Lenkhandhabe und Fahrzeuglenkrädern mit einer als Stellmotor angeordneten ersten doppeltwirkenden Kolben-Zylinder-Einheit, die mit einer weiteren gleichachsig angeordneten, doppeltwirkenden Kolben-Zylinder-Einheit über eine gemeinsame Kolbenstange mechanisch zwangsgekoppelt ist, wobei zumindest eine der Kolben-Zylinder-Einheiten einen axial auf die Kolbenstange geschobenen, in vorgegebener Axiallage an der Kolbenstange befestigten Kolben aufweist, beide Enden der Kolbenstange jeweils mit einem lenkbaren Fahrzeugrad gekoppelt sind und die Kolbenstange durch von der Kolbenstange axial durchsetzte Bodenteile an den voneinander abgewandten Enden der beiden Zylinder radial abgestützt ist.

Die EP 0 307 612 A1 betrifft eine Hilfskraftlenkung, bei der die lenkbaren Fahrzeugräder sowie das fahrerseitig betätigte Lenkhandrad mechanisch zwangsgekoppelt sind; außerdem ist ein hydraulisches Servoaggregat mit zwei parallelen Hydraulikkreisen vorgesehen, wobei zwei Kolben-Zylinder-Einheiten vorhanden sind, deren Zylinder miteinander und mit einem axial zwischen den beiden Kolben angeordneten, die Kolbenstange verschiebbar umfassenden Trennring fest verbunden sind, welcher die Innenräume der Zylinder fluidisch trennt. Die beiden Zylinder sind in einem gemeinsamen, einstückigen Zylinderrohrteil ausgebildet.

Aus der DE 44 35 848 A1 ist es bekannt, einen Kolben eines Kolben-Zylinder-Aggregates als Ringteil auszubilden, welches an seinem Innenumfang axiale Ringflansche aufweist, die in entsprechende Ringnuten der Kolbenstange eingedrückt sind.

Die DE 43 31 291 C1 sowie die JP 57-198168 A zeigen Kolben-Zylinder-Aggregate mit an den Enden der Zylinder angeordneten Manschetten, deren Innenräume über eine Axialbohrung in der Kolbenstange kommunizieren. Außerdem zeigt die letztgenannte Druckschrift auch, daß an der Kolbenstange angeordnete Gelenke mit Bodenteilen des Zylinders zur Hubbegrenzung der Kolbenstange anschlagartig zusammenwirken können.

Die Erfindung ist auf ein Lenkungskonzept gerichtet, bei dem auf eine Zwangskopplung von Lenkhandrad bzw. Lenkhandhabe und gelenkten Fahrzeugrädern verzichtet werden kann. Dieses Konzept ähnelt also den Steuerungen von Leitwerken moderner Flugzeuge; entsprechende Anordnungen sind dort unter dem Begriff "Fly by wire" bekannt.

Um Fahrzeuglenkungen ohne mechanische Zwangskopplung zwischen der Lenkhandhabe bzw. dem Lenkhandrad und den Fahrzeuglenkrädern unter allen Umständen sicher zu machen, müssen Redundanzen bzw. sogenannte Rückfallebenen vorhanden sein, welche auch bei Ausfall eines wesentlichen Systems die Sicherheit des Fahrzeuges gewährleisten, wobei auch eine Weiterfahrt weitestgehend unbeschränkt möglich bleiben soll.

Aufgabe der Erfindung ist es nun, für eine Lenkung ohne mechanische Zwangskopplung zwischen Lenkhandhabe bzw. Lenkhandrad und Fahrzeuglenkrädern eine vorteilhafte Konstruktion zu schaffen.

Diese Aufgabe wird erfindungsgemäß dadurch gelöst, dass bei einer die eingangs angegebenen Merkmale aufweisenden Lenkung die Zylinder der beiden Einheiten miteinander fest verbunden sind und axial zwischen den beiden Kolben ein fest mit den Zylindern der beiden Einheiten verbundener und an einem Zylinderrohrteil oder an beiden Zylindern befestigter, Trennring mit zwischen einem Außenumfang des Trennrings und einem Innenumfang des Zylinderrohrteils oder eines der beiden Zylinder angeordneten Dichtringen angeordnet ist, der die Innenräume der Zylinder fluidisch trennt, die Kolbenstange verschiebbar umfasst und sie als Radiallager radial abstützt.

Die Erfindung beruht auf dem allgemeinen Gedanken zur Lenkbetätigung der Fahrzeuglenkräder zwei parallel zueinander angeordnete Kolben-Zylinder-Einheiten vorzusehen, von denen eine die Stellarbeit bei Normalbetrieb übernehmen kann und die andere für einen Notfall als sogenannte Rückfallebene geeignet ist. Dabei bilden die beiden Kolben-Zylinder-Einheiten ein Aggregat, welches in seiner Konstruktion sehr weitgehend grundsätzlich bekannten herkömmlichen Servolenkungen ähnelt, bei denen die Kolbenstange eines doppeltwirkenden Kolben-Zylinder-Aggregates einstükkig in eine Zahnstange übergeht, die mit einem Ritzel kämmt, welches seinerseits mechanisch mit einem Lenkhandrad antriebsverbunden ist. Bei dem erfin dungsgemäßen Aggregat braucht im wesentlichen nur anstelle der Zahnstange eine verlängerte Kolbenstange vorgesehen zu werden, die dann ihrerseits einen weiteren Kolben haltert und innerhalb eines weiteren Zylinders angeordnet ist, wobei dieser weitere Zylinder an den Zylinder der ersten Kolben-Zylinder-Einheit fest anschließt bzw. mit diesem Zylinder ein einstückiges Teil bildet.

Im übrigen wird hinsichtlich bevorzugter Merkmale der Erfindung auf die Ansprüche sowie die nachfolgende Erläuterung der Zeichnung verwiesen, anhand der besonders vorteilhafte Ausführungsformen beschrieben werden.

Dabei zeigt
- Fig. 1: eine schaltplanartige Prinzipdarstellung einer erfindungsgemäßen Lenkung ohne mechanische Zwangskopplung zwischen Lenkhandhabe und Fahrzeuglenkrädern,
- Fig. 2: einen Axialschnitt einer ersten Ausführungsform eines Kolben-Zylinder-Aggregates mit zwei doppeltwirkenden Kolben-Zylinder-Einheiten, wobei die Zylinder beider Einheiten ein einstückiges Zylinderteil bilden,
- Fig. 3: ein der Fig. 2 entsprechendes Schnittbild einer abgewandelten Ausführungsform und
- Fig. 4: einen Axialschnitt einer Ausführungsform, bei der für jede Kolben-Zylinder-Einheit ein gesondertes Zylinderteil vorgesehen ist, wobei beide Zylinderteile miteinander fest verbunden sind.

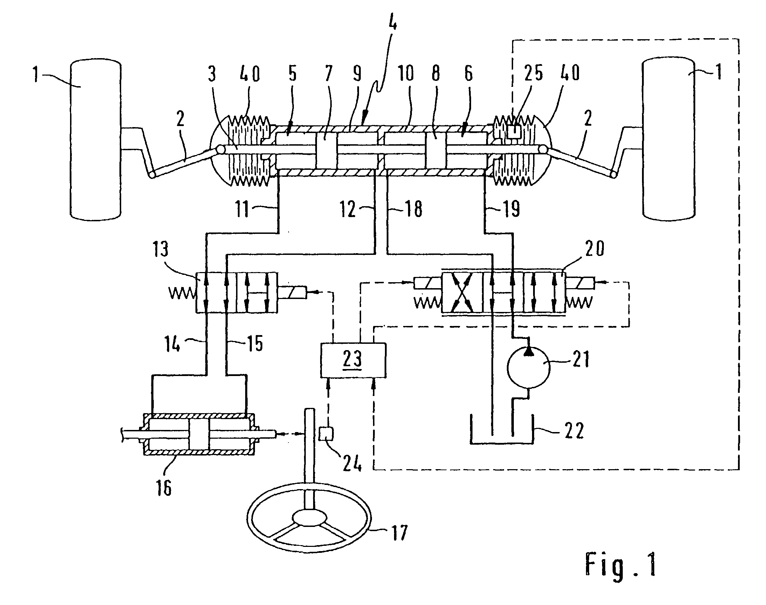

Gemäß Fig. 1 besitzt ein nicht näher dargestelltes Kraftfahrzeug zwei Fahrzeuglenkräder 1, die in grundsätzlich bekannter Weise über Spurstangen 2 zur Lenkbetätigung mit einer Kolbenstange 3 eines Kolben-Zylinder-Aggregates 4 mechanisch gekoppelt sind, derart, daß eine Lenkwinkeländerung der Lenkräder 1 immer mit einem Hub der Kolbenstange 3 verbunden ist.

Das Kolben-Zylinder-Aggregat 4 besitzt zwei doppeltwirkende Kolben-Zylinder-Einheiten 5 und 6 mit jeweils einem Kolben 7 bzw. 8 und einem vom jeweiligen Kolben 7 bzw. 8 in zwei Kammern unterteilten Zylinder 9 bzw. 10.

Die beiden Kammern des Zylinders 9 sind über Leitungen 11 und 12 mit einem Umschaltventil 13 verbunden, welches seinerseits über Leitungen 14 und 15 mit einer doppeltwirkenden Kolben-Zylinder-Anordnung 16 verbunden ist, deren Kolben mechanisch mit einem Lenkhandrad 17 des Fahrzeuges antriebsverbunden ist.

Der Zylinder 10 ist über Leitungen 18 und 19 mit einem Steuerventil 20 verbunden, welches seinerseits an die Druckseite einer Hydraulikpumpe 21 bzw. eine sonstige hydraulische Druckquelle sowie ein relativ druckloses Hydraulikreservoir 22 angeschlossen ist, welches auch mit der Saugseite der Pumpe 21 verbunden ist.

Das Steuerventil 20 wird von einer Regelstrekke 23 betätigt, die eingangsseitig mit einem vom Lenkhandrad 17 betätigten Sollwertgeber 24 sowie Istwertgebern 25 für den Lenkwinkel der Fahrzeuglenkräder 1 verbunden ist. Außerdem besitzt die Regelstrecke 23 weitere Eingänge (nicht dargestellt) fürweitere Parameter. Ausgangsseitig ist die Regelstrecke 23 im übrigen noch mit dem Stellmagnet des Umschaltventiles 13 verbunden.

Die in Fig. 1 dargestellte Lenkung arbeitet wie folgt:

Bei normalem Betrieb wird der Stellmagnet des Umschaltventiles 13 von der Regelstrecke 23 bestromt, so daß das Umschaltventil 13 gegen die Kraft seiner Rückstellfederung in die in Fig. 1 nicht dargestellte andere Position gestellt und in dieser gehalten wird, in der sowohl die Kolben-Zylinder-Einheit 5 als auch die Kolben-Zylinder-Anordnung 16 auf Freilauf geschaltet sind. Durch das Lenkhandrad 17 wird der Sollwertgeber 24 betätigt, welcher dementsprechend jeweils einen Sollwert des Lenkwinkels der Fahrzeuglenkräder 1 vorgibt. In Abhängigkeit von einem Soll-Istwert-Vergleich, welcher von der Regelstrecke 23 durch Auswertung der Signale von Sollwertgeber 24 und Istwertgeber 25 durchgeführt wird, betätigt die Regelstrecke 23 das Steuerventil 20, derart, daß bei entsprechendem Stellbedarf zwischen den beiden Kammem der Kolben-Zylinder-Einheit 6 eine mehr oder weniger große Druckdifferenz in der einen oder anderen Richtung erzeugt und damit eine entsprechende Stellkraft zur Lenkbetätigung der Fahrzeuglenkräder 1 wirksam wird. Die Regelstrekke 23 überwacht sich ständig auf korrekte Funktion. Sollte eine Fehlfunktion auftreten, werden einerseits die elektromagnetischen Stellorgane der Steuerventiles 20 und andererseits der Stellmagent des Umschaltventiles 13 stromlos geschaltet, mit der Folge, daß das Steuerventil 20 durch eine Rückstellfederung in eine die Kolben-Zylinder-Einheit 6 auf Freilauf schaltende Position und das Umschaltventil 13 auf die in Fig. 1 dargestellte Position eingestellt werden, in der die Kolben-Zylinder-Einheit 5 sowie die Kolben-Zylinder-Anordnung 16 miteinander hydraulisch zwangsgekoppelt sind und dementsprechend das Lenkhandrad 17 und die Fahrzeuglenkräder 1 miteinander über eine hydraulische "Lenksäule" miteinander gekoppelt sind.

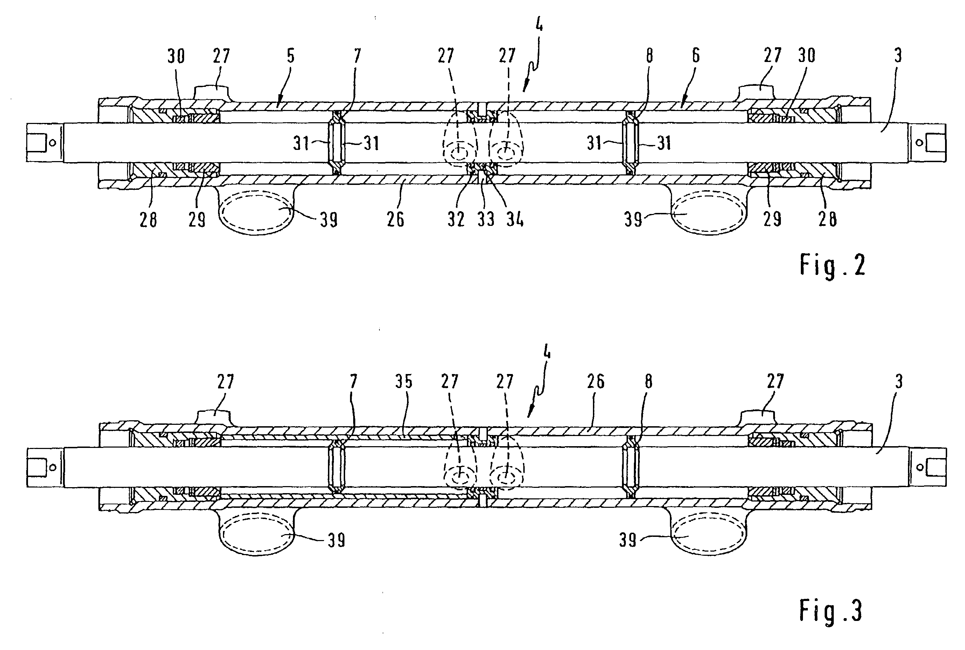

Das in Fig. 2 dargestellte Kolben-Zylinder-Aggregat 4 besitzt ein für beide Kolben-Zylinder-Einheiten 5 und 6 gemeinsames, die Zylinder 9 und 10 der Fig. 1 bildendes Zylinderrohrteil 26 mit seitlichen Anschlüssen 27 für die Leitungen 11,12,18 und 19 (vgl. Fig. 1). In die stufenförmig leicht aufgeweiteten Enden des Zylinderrohrteiles 26 sind muffenartige Bodenteile 28 eingesetzt, welche auf ihrem Außenumfang eine Ringnut für die Anordnung einer Ringdichtung aufweisen, die zur Abdichtung des Spaltes zwischen dem Außenumfang der Bodenteile 28 und dem Zylinderrohrteil 26 dient. Die Bodenteile 28 werden von der Kolbenstange 3 durchsetzt, welche mittels an den Bodenteilen 28 befestigter Lagerhülsen 29 radial gelagert ist. Axial neben den Lagerhülsen 29 ist am Innenumfang der Bodenteile 28 jeweils eine ringförmige Vertiefung zur Aufnahme einer Dichtung 30 angeordnet, die eine Verschiebung der Kolbenstange 3 zuläßt und dieselbe dicht umfaßt.

Die Kolben 7 und 8 sind als ringförmige, auf die Kolbenstange 3 aufschiebbare Teile ausgebildet und besitzen an ihren Innenumfängen stirnseitige axiale Ringflansche, die mit einem Rollierwerkzeug in entsprechend angeordnete Ringnuten 31 an der Kolbenstange 3 unter Verformung eingedrückt sind und die Kolben 7 und 8 sowie die Kolbenstange 3 dicht und fest miteinander verbinden.

Axial zwischen den Kolben 7 und 8 ist auf die Kolbenstange 3 ein Trennring 32 aufgeschoben, welcher bei seiner Montage durch entsprechende Verschiebung der Kolbenstange 3 mittels der Kolben 7 und 8 in die in Fig. 2 dargestellte Axiallage gebracht und sodann, beispielsweise mittels Stiften 33, die entsprechenden Radialbohrungen des Zylinderrohrteiles 26 durchsetzen und in eine Außenumfangsnut des Trennrings 32 eingreifen, am Zylinderrohrteil 26 befestigt ist. Neben der Nut für die Stifte 33 besitzt der Trennring 32 zwei weitere Außenumfangsnuten zur Aufnahme von Dichtringen, welche den Spalt zwischen dem Außenumfang des Trennrings 32 und dem Innenumfang des Zylinderrohrteiles 26 abdichten. Am Innenumfang des Trennrings 32 sind einerseits ringförmige Ausnehmungen zur Aufnahme von Dichtungen für die Kolbenstange 3 sowie axial dazwischen eine Lagerhülse 34 zur Radiallagerung der Kolbenstange 3 angeordnet.

Die Ausführungsform der Fig. 3 unterscheidet sich von der Ausführungsform der Fig. 2 im wesentlichen nur dadurch, daß auf der in Fig. 3 linken Seite des Trennrings 32 zur Verminderung der Querschnittes des Zylinder 9 eine Kolbenlaufbuchse 35 angeordnet ist und der Kolben 7 einen entsprechend angepaßten Außendurchmesser aufweist. An den axialen Enden der Kolbenlaufbuchse 35 sind Axialschlitze oder sonstige Aussparungen angeordnet, derart, daß die dem Zylinder 9 zugeordneten Anschlüsse 27 jeweils mit dem Innenraum der Kolbenlaufbuchse 35 kommunizieren können.

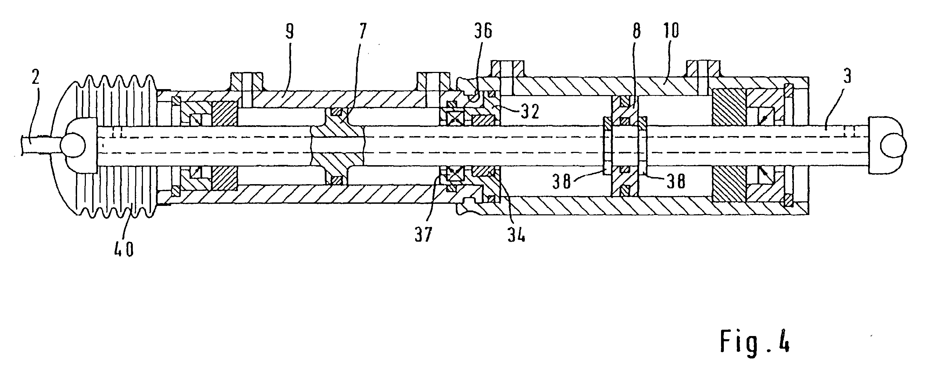

Bei der Ausführungsform der Fig. 4 bilden die Zylinder 9 und 10 jeweils voneinander gesonderte Teile, wobei der im Durchmesser etwas größere Zylinder 10 den Zylinder 9 außenseitig axial etwas überlappt und im dargestellten Beispiel dadurch mit dem Zylinder 9 fest verbunden ist, daß seine Wandung in eine Außenumfangsnut 36 des Zylinders 9 eingedrückt ist.

Der Trennring 32 wird im Beispiel der Fig. 4 dadurch axial festgehalten, daß er mit mit einem außenumfangsseitigen flanschartigen Ringsteg an seinem einen Stirnende in eine innenumfangsseitige Ringnut eingreift, die zwischen dem in Fig. 4 rechten Stirnende des Zylinders 9 und einer innenumfangsseitigen Ringstufe des Zylinders 10 ausgebildet ist.

Die Spalte zwischen dem Außenumfang des Trennringes 32 bzw. seines Ringsteges sowie den Innenumfängen der Zylinder 9 und 10 werden durch Dichtringe abgesperrt, die in Ringnuten am Innenumfang des Zylinders 9 bzw. am Außenumfang des Ringsteges des Trennringes 32 ausgebildet sind.

Im Beispiel der Fig. 4 ist am Innenumfang des Trennringes 32 lediglich eine einzige Dichtung 37 axial neben der Lagerhülse 34 angeordnet, um den Ringspalt zwischen Kolbenstange und Innenumfang des Trennringes 32 abzudichten. Des weiteren zeigt die Fig. 4, daß einer der Kolben 7 und 8, im dargestellten Beispiel der Kolben 7, einstückig mit der Kolbenstange 3 verbunden sein kann. Der andere Kolben 8 ist wiederum als ringförmiges Teil ausgebildet und auf die Kolbenstange 3 axial aufgeschoben, wobei er im Beispiel der Fig. 4 an der Kolbenstange 3 durch Ringe 38 axial festgehalten wird, die in entsprechenden Ringnuten der Kolbenstange 3 sitzen. Bei dieser Ausführungsform wird der Ringspalt zwischen Kolbenstange 3 und Kolben 8 durch einen Dichtring abgesperrt, welcher in einer Ringnut am Innenumfang des ringförmigen Kolbens 8 angeordnet ist.

Bei allen Ausführungsformen der Fig. 2 bis 4 können zur Halterung des Kolben-Zylinder-Aggregates 4 jeweils an den Zylindern 9 und 10 bzw. am Zylinderrohrteil 26 Lagerfüße bzw. -teile 39 (nur in den Fig. 2 und 3 dargestellt) angeordnet sein, um das Aggregat 4 am Chassis oder einem Rahmenaggregat eines Fahrzeuges zu befestigen.

Um die gelenkigen Verbindungen zwischen der Kolbenstange 3 und den Spurstangen 2 und gleichzeitig die Lagerung der Kolbenstange 3 in den Bodenteilen 28 gegen Staub zu schützen, können gemäß Fig. 1 Schutzmanschetten 40 vorgesehen sein, die einerseits an den gelenkseitigen Enden der Spurstangen 2 und andererseits an den zugewandten Enden derZylinder 8 und 10 bzw. des Zylinderrohrteiles 26 befestigt sind. Dabei ist vorteilhaft vorgesehen, die Innenräume der Manschetten 40 über eine die Kolbenstange 3 durchsetzende Axialbohrung miteinander zu verbinden, derart, daß bei Hubbewegungen der Kolbenstange 3 ein Luftaustausch zwischen den Innenräumen der Schutzmanschetten 40 ermöglicht wird. Bei derartigen Hubbewegungen der Kolbenstange 3 vergrößert sich jeweils der Innenraum einer Schutzmanschette 40, während sich der Innenraum der anderen Schutzmanschette 40 entsprechend verkleinert.

## Patentansprüche

1. Hydraulisch betätigte Lenkung für Kraftfahrzeuge ohne mechanische Zwangskopplung zwischen Lenkhandhabe und Fahrzeuglenkrädern, mit
- einer als Stellmotor angeordneten ersten doppeltwirkenden Kolben-Zylinder-Einheit (5), die mit einer weiteren gleichachsig angeordneten, doppeltwirkenden Kolben-Zylinder-Einheit (6) über eine gemeinsame Kolbenstange (3) mechanisch zwangsgekoppelt ist, wobei
- zumindest eine der Kolben-Zylinder-Einheiten (5, 6) einen axial auf die Kolbenstange (3) geschobenen, in vorgegebener Axiallage an der Kolbenstange (3) befestigten Kolben (7, 8) aufweist,
- beide Enden der Kolbenstange (3) jeweils mit einem lenkbaren Fahrzeugrad (1) gekoppelt sind und
- die Kolbenstange (3) durch von der Kolbenstange (3) axial durchsetzte Bodenteile (28) an den voneinander abgewandten Enden der beiden Zylinder (9, 10) radial abgestützt ist,
**dadurch gekennzeichnet, dass**
- die Zylinder (9, 10) der beiden Einheiten (5, 6) miteinander fest verbunden sind und
- axial zwischen den beiden Kolben (7, 8) ein fest mit den Zylindern (9, 10) der beiden Einheiten (5, 6) verbundener und an einem Zylinderrohrteil (26) oder an beiden Zylindern (9, 10) befestigter Trennring (32) mit zwischen einem Außenumfang des Trennrings (32) und einem Innenumfang des Zylinderrohrteils (26) oder eines der beiden Zylinder (9, 10) angeordneten Dichtringen angeordnet ist, der
- die Innenräume der Zylinder (9, 10) fluidisch trennt,
- die Kolbenstange (3) verschiebbar umfasst und sie als Radiallager radial abstützt.

2. Lenkung nach Anspruch 1,
**dadurch gekennzeichnet,**
**daß** der Trennring (32) ein einstückiges Zylinderrohrteil (26) in die beiden Zylinder (9,10) unterteilt.

3. Lenkung nach Anspruch 1 oder 2,
**dadurch gekennzeichnet,**
**daß** zumindest einer der Kolben (7,8) als Ringteil ausgebildet ist und an seinem Innenumfang zumindest einen axialen Ringflansch aufweist, welcher in eine Ringnut der Kolbenstange (3) eingedrückt bzw. eingerollt ist.

4. Lenkung nach Anspruch 1 oder 3,
**dadurch gekennzeichnet,**
**daß** die beiden Zylinder (9,10) einander im Bereich des Trennringes (32) axial überlappen.

5. Lenkung nach Anspruch 4,
**dadurch gekennzeichnet,**
**daß** ein Zylinder (10) den anderen Zylinder (9) außenseitig axial überlappt und mit seiner Wandung in eine Ringnut am Außenumfang des anderen Zylinders (9) eingerollt bzw. eingedrückt ist.

6. Lenkung nach einem der Ansprüche 1 bis 5,
**dadurch gekennzeichnet,**
**daß** an den voneinander abgewandten Enden der Zylinder (9,10) angeordnete Manschetten (40) über eine die Kolbenstange (3) durchsetzende Axialbohrung miteinander kommunizierende Innenräume aufweisen.

7. Lenkung nach einem der Ansprüche 1 bis 6,
**dadurch gekennzeichnet,**
**daß** an den Enden der Kolbenstange (3) angeordnete Anschlußteile bzw. Gelenke mit den Bodenteilen (28) zur Hubbegrenzung der Kolbenstange (3) anschlagartig zusammenwirken.

## Claims

1. Hydraulically operated steering for motor vehicles, with no mechanical forced coupling between the manual steering and vehicle steered wheels, comprising
- a first double-acting piston-cylinder unit (5) provided as a servomotor, which is mechanically forcibly coupled by a common piston rod (3) with another, coaxially disposed double-acting piston-cylinder unit (6), wherein
- at least one of the piston-cylinder units (5, 6) has a piston (7, 8) pushed axially onto the piston rod (3) and secured to the piston rod (3) in a predetermined axial position,
- both ends of the piston rod (3) are respectively coupled with a steerable vehicle wheel (1) and
- the piston rod (3) is radially supported by floor parts (28) at the ends of the two cylinders (9, 10) remote from one another through which the piston rod (3) axially extends,
**characterised in that**
- the cylinders (9, 10) of the two units (5, 6) are fixedly joined to one another and,
- axially disposed between the two pistons (7, 8), fixedly joined to the cylinders (9, 10) of the two units (5, 6) and secured to a cylinder tube part (26) or to both cylinders (9, 10) is a dividing ring (32) with seals disposed between an external circumference of the dividing ring (32) and an internal circumference of the cylinder tube part (26) or one of the two cylinders (9, 10), which
- divides the interior of the cylinder (9,10) with respect to fluid ,
- slidably engaging round the piston rod (3) and radially supporting it in the form of a radial bearing.

2. Steering as claimed in claim 1,
**characterised In that**
the dividing ring (32) divides a single-piece cylindrical tube component (26) into the two cylinders (9, 10).

3. Steering as claimed in claim 1 or 2,
**characterised in that**
at least one of the pistons (7, 8) is designed as an annular component and has at least one axial annular flange on its inner circumference which is pushed into or clamped in an annular groove of the piston rod (3).

4. Steering as claimed in claim 1 or 3,
**characterised In that**
the two cylinders (9,10) axially overlap with one another in the region of the dividing ring (32).

5. Steering as claimed in claim 4,
**characterised In that**
one cylinder (10) axially overlaps with the external face of the other cylinder (9) and is clamped or pushed by its wall in an annular groove on the external circumference of the other cylinder (9).

6. Steering as claimed in one of claims 1 to 5,
**characterised in that**
cups (40) disposed at remote ends of the cylinders (9, 10) have interior chambers communicating with one another via an axial bore extending through the piston rod (3).

7. Steering as claimed in one of claims 1 to 6,
**characterised in that**
connecting parts or links disposed at the ends of the piston rod (3) co-operate with the floor parts (28) in a stop arrangement in order to limit the stroke of the piston rod (3).

## Revendications

1. Direction à actionnement hydraulique, pour des véhicules automobiles sans couplage mécanique forcé entre la manette de direction et les roues directrices du véhicule, avec
- un premier ensemble piston-cylindre (5) à double effet, disposé en tant que servomoteur, qui est couplé mécaniquement de façon forcée à un autre ensemble piston-cylindre (6) à double effet disposé sur le même axe, par l'intermédiaire d'une tige de piston (3) commune,
- au moins l'un des ensembles piston-cylindre (5, 6) présentant un piston (7, 8) enfilé axialement sur la tige de piston (3), et fixé en une position axiale prédéterminée sur la tige de piston (3),
- les deux extrémités de la tige de piston (3) étant respectivement couplées à une roue directrice de véhicule (1) et
- la tige de piston (3) étant soutenue radialement aux extrémités, opposées l'une à l'autre, des deux cylindres (9, 10), au moyen de parties fond (28) traversées axialement par la tige de piston (3),
**caractérisée en ce que**
- les cylindres (9, 10) des deux ensembles (5, 6) sont reliés rigidement ensemble et
- un anneau de séparation (32) relié solidement aux cylindres (9, 10) des deux ensembles (5, 6) et fixé à une partie tubulaire de cylindre (26) ou aux deux cylindres (9, 10) est disposé axialement entre les deux pistons (7, 8) au moyen de joints disposés entre une périphérie externe de l'anneau de séparation (32) et une périphérie interne de la partie tubulaire de cylindre (26) ou d'un des deux cylindres (9, 10), lequel
- assure la séparation fluidique des espaces intérieurs des cylindres (9, 10)
- englobe en coulissement la tige de piston (3) et la soutient radialement en tant que palier radial.

2. Direction selon la revendication 1, **caractérisée en ce que** l'anneau de séparation (32) assure la subdivision, en les deux cylindres (9, 10), d'une partie tubulaire de cylindre (26) réalisée d'une seule pièce.

3. Direction selon la revendication 1 ou 2, **caractérisée en ce qu'**au moins l'un des pistons (7, 8) est réalisé sous la forme de partie annulaire et présente, sur sa périphérie intérieure, au moins une bride annulaire axiale qui est enfoncée ou enroulée dans une gorge annulaire appartenant à la tige de piston (3).

4. Direction selon la revendication 1 ou 3, **caractérisée en ce que** les deux cylindres (9, 10) se chevauchent axialement l'un l'autre dans la zone de l'anneau de séparation (32).

5. Direction selon la revendication 4, **caractérisée en ce qu'**un cylindre (10) chevauche axiale ment, du côté extérieur, l'autre cylindre (9) et est enroulé ou pressé, par sa paroi, dans une gorge annulaire ménagée sur la périphérie extérieure de l'autre cylindre (9).

6. Direction selon l'une des revendications 1 à 5, **caractérisée en ce que** des manchettes (40), disposées sur les extrémités, opposées l'une à l'autre, des cylindres (9, 10) présentent des espaces intérieurs qui communiquent entre eux par l'intermédiaire d'un perçage axial traversant la tige de piston (3).

7. Direction selon l'une des revendications 1 à 6, **caractérisée en ce que** des parties de raccordement ou des articulations, disposées sur les extrémités de la tige de piston (3), coopèrent, à la façon de butées, avec les parties fond (28), dans le but de limiter la course de la tige de piston (3).
